# FASCICULE DE BREVET EUROPEEN

(11) **EP 3 621 093 B1**
(45) Date de publication et mention de la délivrance du brevet: **27.04.2022**
(21) Numéro de dépôt: 19193053.6
(22) Date de dépôt: 22.08.2019
(51) Int. Cl.: H01G 2/08

(54) **BLOC CAPACITIF COMPRENANT UN DISSIPATEUR THERMIQUE**
KAPAZITIVER BLOCK MIT EINEM KÜHLKÖRPER
CAPACITIVE BLOCK COMPRISING A HEAT SINK

(30) Priorité: 04.09.2018 FR 1857943
(43) Date de publication de la demande: 11.03.2020
(73) Titulaire: Valeo Siemens eAutomotive France SAS, 95800 Cergy (FR)
(72) Inventeur: PARIGOT, Baptiste, 78290 Croissy-sur-Seine (FR); MOCERI, Alwin, 78700 Conflans Sainte-Honorine (FR)
(74) Mandataire: Novembre, Christophe Adelphe

(56) Documents cités:
- US-A1- 2011 007 480
- US-A1- 2011 317 331

## Description

La présente invention concerne un bloc capacitif, notamment pour un équipement électrique, par exemple embarqué dans un véhicule automobile. Un tel équipement électrique peut être un onduleur, un convertisseur de tension ou un chargeur électrique de batterie.

Typiquement, au cours de son fonctionnement, une capacité est soumise à des variations de température qui, lorsqu'elle est entourée d'air, peuvent provoquer une condensation de l'humidité de l'air environnant. Une telle formation d'eau par condensation peut entraver le bon fonctionnement de la capacité. Un agencement étanche est donc nécessaire. En général la capacité est noyée dans une résine polymérisable. Une telle résine est coulée dans un état fluide autour de la capacité, puis polymérisée pour prendre un état solide. Une telle polymérisation peut être réalisée par chaleur dans un four. Ainsi, la résine entoure complètement la capacité de manière étanche. Cette résine est également un isolant électrique.

Par ailleurs, les capacités sont des composants utilisés dans des onduleurs, des convertisseurs de tension ou des chargeurs électriques embarqués. En particulier dans des applications de véhicules électriques ou hybrides, les courants électriques peuvent avoir des intensités élevées. La génération de chaleur par effet joule peut alors devenir importante au risque d'endommager la capacité. Afin d'éviter toute dégradation par la chaleur, un système de refroidissement du condensateur est nécessaire. On connaît un tel système par la publication de demande de brevet US2010/0259898, dans lequel la dissipation thermique du condensateur est réalisée à travers la résine. Malheureusement, dans un contexte de véhicule électrique ou hybride, la résine n'a pas une conductivité thermique suffisante. Par exemple une résine a une conductivité thermique comprise entre 0,5 W/m.K et 1 W/m.K. En conséquence la chaleur ne peut être dissipée de façon rapide et efficace. Un autre exemple d'un tel dispositif est divulgué par les documents US2011/007480, Souda Akihiko, publié le 13 Janvier 2011, et US2011/317331, Lee Sang Kyun, publié le 29 Décembre 2011.

Il est donc recherché un système de refroidissement efficace pour les capacités, notamment une façon de dissiper la chaleur du condensateur de façon rapide et efficace.

À cet effet, la présente invention concerne un bloc capacitif, notamment pour un équipement électrique, comportant :
- un boîtier,
- un élément capacitif logé dans le boîtier,
- une substance remplissant l'espace entre le boîtier et l'élément capacitif de manière à réaliser une étanchéité de l'élément capacitif,
- un dissipateur thermique contre lequel l'élément capacitif est en contact direct,
bloc capacitif dans lequel le dissipateur thermique est différent de la substance de remplissage, une face dudit dissipateur thermique, dite face libre, formant une face externe du bloc capacitif et étant dépourvue de ladite substance de remplissage.

Ainsi, dans le bloc capacitif selon l'invention, la dissipation thermique ne s'effectue pas au travers de la substance de remplissage, mais au travers d'un dissipateur thermique directement en contact avec l'élément capacitif. Le bloc capacitif dissipe donc la chaleur plus efficacement que dans l'art antérieur. Notamment, l'élément capacitif est en contact direct avec le dissipateur thermique. Autrement dit, le bloc capacitif est dépourvu de substance de remplissage entre l'élément capacitif et le dissipateur thermique. En particulier, la substance de remplissage est fluide lors du remplissage du boîtier, puis devient solide après une étape de polymérisation. Notamment la substance de remplissage est une substance polymérisable, telle qu'une résine polymérisable par exemple.

Selon un aspect de la présente invention le dissipateur thermique présente une conductivité thermique supérieure à celle de la substance de remplissage. Ainsi, la meilleure conductivité thermique du dissipateur thermique permet de guider la chaleur vers un circuit de refroidissement contre lequel peut venir la face libre du dissipateur thermique, et d'accélérer ainsi l'échange thermique par rapport à l'art antérieur. Notamment, la face libre du dissipateur thermique forme une surface lisse et plate configurée pour venir contre une face correspondante d'un circuit de refroidissement. Ainsi, on évite la présence de poches d'air entre le dissipateur thermique et le circuit de refroidissement contre lequel vient la face libre. La plaque est par exemple métallique.

Selon un autre aspect de l'invention le dissipateur thermique comporte une plaque dont une face opposée à l'élément capacitif forme ladite face libre du dissipateur thermique.

Selon un autre aspect de la présente invention, la plaque comporte deux faces opposées reliées par un bord s'étendant transversalement à ces deux faces. Une face de la plaque comprend la face libre du dissipateur thermique. Notamment, la face de la plaque opposée à la face libre vient en appui contre l'élément capacitif, en particulier directement ou indirectement par l'intermédiaire d'une couche thermoconductrice et diélectrique différente de la substance de remplissage. Selon un autre aspect de la présente invention, la substance de remplissage vient en contact avec le bord de la plaque. Autrement dit, la substance de remplissage vient contre l'épaisseur de la plaque. La substance de remplissage vient en contact avec le bord de la plaque en particulier sur une hauteur supérieure ou égale à 2mm depuis la face de la plaque en contact avec l'élément capacitif. Une telle hauteur de contact de la substance de remplissage sur au moins une portion de l'épaisseur de la plaque permet de garantir l'étanchéité autour de la plaque et ainsi d'éviter une infiltration d'humidité autour de la plaque jusqu'à l'élément capacitif.

En particulier, le dissipateur thermique et l'élément capacitif sont maintenus ensemble par la substance de remplissage solidifiée. Ceci est notamment le cas lorsque la substance de remplissage est une substance polymérisable, telle qu'une résine polymérisable par exemple. Ainsi, la substance de remplissage contribue au moins en partie au maintien ensemble du dissipateur thermique et de l'élément capacitif. Ainsi, le bloc capacitif forme un seul objet manipulable.

Selon un autre aspect de l'invention la substance de remplissage s'étend à une hauteur inférieure à la hauteur de la face libre du dissipateur thermique, lesdites hauteurs étant définies par rapport à un fond du boîtier. En particulier « hauteur » s'entend comme une distance mesurée depuis le fond du boîtier dans le sens de l'empilement des pièces, notamment dans une direction suivant laquelle le dissipateur thermique vient contre l'élément capacitif, puis un circuit de refroidissement vient contre le dissipateur. Ainsi, lorsque le bloc capacitif est amené contre un circuit de refroidissement, par un côté comprenant la face libre du dissipateur, la face libre vient contre le circuit de refroidissement, aucune surélévation de la substance de remplissage n'empêche un contact de la face libre avec le circuit de refroidissement. Une dissipation thermique efficace du dissipateur thermique vers le circuit de refroidissement peut donc être obtenue.

Selon un autre aspect de la présente invention, le dissipateur thermique comporte une couche d'interface thermoconductrice et diélectrique. La couche d'interface forme un contact entre le dissipateur thermique et l'élément capacitif. Notamment, la couche d'interface est entre l'élément capacitif et ladite plaque. Le caractère diélectrique de la couche d'interface empêche un court circuit entre l'élément capacitif et la plaque du dissipateur thermique, tandis que sa conductivité thermique permet une dissipation efficace de la chaleur. Notamment, sa conductivité thermique est supérieure à celle de la substance de remplissage. En particulier, la couche d'interface est une feuille de matériau diélectrique, préformée et rapportée. Selon un autre aspect de la présente invention, la couche d'interface à une portion débordante autour de ladite plaque. Autrement dit, la couche d'interface dépasse tout autour de la plaque du dissipateur thermique. Ceci est particulièrement avantageux lorsque la plaque est susceptible de réaliser un court-circuit avec l'élément capacitif. La portion débordante de la couche d'interface empêche la création d'un arc électrique entre l'élément capacitif et la plaque du dissipateur thermique. La portion débordante augmente la ligne de fuite entre la plaque et l'élément capacitif.

Selon un autre aspect de la présente invention, l'élément capacitif comporte au moins une languette de connexion électrique. La languette forme une face de contact de l'élément capacitif avec le dissipateur thermique. La languette se connecte électriquement à une électrode de l'élément capacitif par une face opposée à sa face de contact. Ainsi, la languette de connexion électrique est directement en contact avec le dissipateur thermique, ce qui permet de dissiper efficacement une chaleur produite dans la languette de connexion électrique. En outre, le positionnement de la languette de connexion du même côté que le dissipateur thermique permet de limiter une dimension du bloc capacitif sur un côté contigu.

Selon un autre aspect de la présente invention, le boîtier comprend une paroi formant un fond du boîtier. Depuis le fond du boîtier des parois s'étendent de manière à former des parois latérales du boîtier. Le fond et les parois latérales définissent un logement recevant l'élément capacitif. Une face de l'élément capacitif, opposée au fond du boîtier forme une face venant directement contre le dissipateur thermique. Le boîtier sert donc de récipient pour l'élément capacitif et la substance de remplissage. Le bloc capacitif est ainsi isolé électriquement et forme un élément facile à intégrer dans un équipement électrique

L'invention concerne aussi un ensemble comprenant un bloc capacitif selon l'invention, qui est assemblé avec un circuit de refroidissement. Le circuit de refroidissement est configuré pour recevoir un fluide destiné à drainer la chaleur du bloc capacitif. La face libre du dissipateur thermique vient contre une face dudit circuit de refroidissement. Le circuit de refroidissement comporte notamment des canaux configurés pour recevoir un fluide de refroidissement, en particulier un liquide, de manière à refroidir le bloc capacitif. Le contact entre la face libre du dissipateur thermique et le circuit de refroidissement permet une dissipation efficace de la chaleur.

Selon un aspect de l'invention, la face libre du dissipateur thermique est en contact direct avec le circuit de refroidissement.

Selon un autre aspect de l'invention, une seconde couche d'interface thermoconductrice et diélectrique est disposée entre la face libre du dissipateur thermique et le circuit de refroidissement. Notamment, la seconde couche d'interface est insérée entre ladite plaque et une portion du circuit de refroidissement contre laquelle la plaque vient en appui. En particulier, la couche d'interface est une feuille de matériau isolant et diélectrique, préformée et rapportée. Alternativement, la couche d'interface peut être une substance, par exemple une graisse thermique, ayant une conductivité thermique supérieure à celle de la substance de remplissage.

Alternativement, la seconde couche d'interface peut être une substance, comme par exemple une graisse thermique, ayant une conductivité thermique supérieure à celle de la substance de remplissage.

La présente invention concerne aussi un procédé d'assemblage d'un bloc capacitif comprenant :
- le positionnement d'un élément capacitif dans un boîtier à travers une ouverture du boîtier,
- le positionnement d'un dissipateur thermique contre une face de l'élément capacitif faisant face à ladite ouverture du boîtier,
- le dépôt d'une substance de remplissage réalisant une étanchéité de l'élément capacitif en remplissant l'espace entre l'élément capacitif et le boîtier, à l'exception d'une zone comprenant une face du dissipateur thermique, dite face libre, qui est opposée à l'élément capacitif et qui forme une face externe du bloc capacitif.

Le procédé d'assemblage assure d'une part l'étanchéité de l'élément capacitif, et d'autre part il permet l'intégration d'un dissipateur thermique dans le bloc capacitif, ce dissipateur thermique comprenant une face libre, prête à être assemblée à un circuit de refroidissement.

L'invention sera mieux comprise et d'autres détails, caractéristiques et avantages de l'invention apparaîtront à la lecture de la description suivante faite à titre d'exemple non limitatif en référence aux figures annexées dans lesquelles :
La figure 1 illustre une vue explosée d'un exemple de bloc capacitif selon l'invention.
La figure 2 illustre une vue en perspective du bloc capacitif de la figure 1.
La figure 3 illustre une vue en coupe du bloc capacitif de la figure 1 agencé à un circuit de refroidissement.

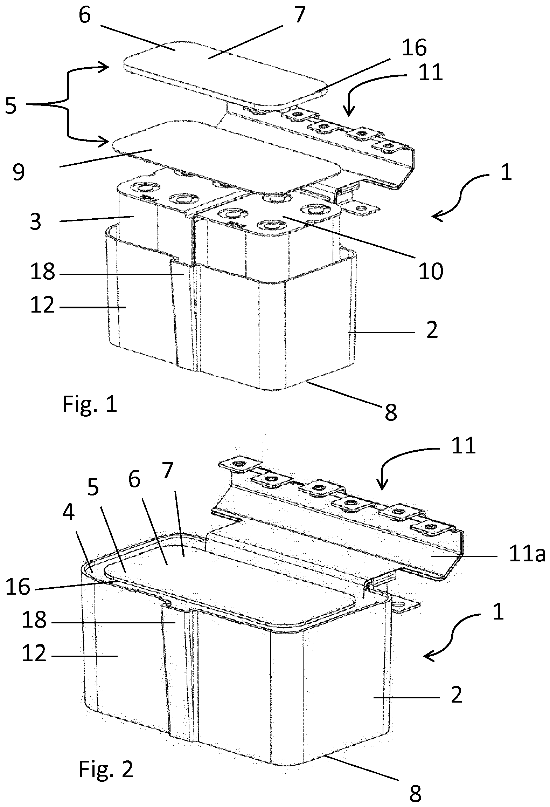

Le bloc capacitif 1, tel qu'illustré par les figures 1 à 3 comporte, un boîtier 2 et un élément capacitif 3, logé dans le boîtier 2, une substance 4 remplissant l'espace entre le boîtier 2 et l'élément capacitif 3 de manière à réaliser une étanchéité de l'élément capacitif 3, et un dissipateur thermique 5 contre lequel l'élément capacitif 3 est en contact direct. Le dissipateur thermique 5 est différent de la substance 4 de remplissage. Le dissipateur thermique 5 comporte aussi une face, dite face libre 6, qui forme une face externe du bloc capacitif 1 et qui est dépourvue de la substance 4 de remplissage.

Dans l'exemple représenté, le dissipateur thermique 5 présente une conductivité thermique supérieure à celle de la substance de remplissage 4. Ainsi, la meilleure conductivité thermique du dissipateur thermique 5 permet de guider la chaleur vers un circuit de refroidissement 13 contre lequel peut venir la face libre 6 du dissipateur thermique 5. Par rapport à l'art antérieur, l'échange thermique est donc amélioré. Notamment, la face libre 6 du dissipateur thermique 5 forme une surface lisse et plate configurée pour venir contre une face correspondante du circuit de refroidissement 13. Ainsi, on évite la présence de poches d'air entre le dissipateur thermique 5 et le circuit de refroidissement 13 contre lequel vient la face libre 6. La plaque 7 est par exemple métallique.

Ainsi, dans le bloc capacitif 1 selon l'invention, la dissipation thermique ne s'effectue pas au travers de la substance de remplissage 4, mais au travers du dissipateur thermique 5 directement en contact avec l'élément capacitif 3. Le bloc capacitif 1 dissipe donc la chaleur plus efficacement que dans l'art antérieur. Notamment, l'élément capacitif 3 est en contact direct avec le dissipateur thermique 5. Autrement dit, le bloc capacitif 1 est dépourvu de substance de remplissage 4 entre l'élément capacitif 3 et le dissipateur thermique 5.

En particulier, la substance de remplissage 4 est fluide lors du remplissage du boîtier 2, puis devient solide après une étape de polymérisation. Notamment la substance de remplissage 4 est une substance polymérisable, telle qu'une résine polymérisable par exemple. En effet son état liquide permet à la substance de remplissage 4 de s'introduire dans tout espace libre entre l'élément capacitif 3 et la paroi intérieur du boîtier 2. Afin d'assurer l'étanchéité la substance de remplissage 4 entoure l'élément capacitif 3 au moins sur tout sa hauteur h.

Dans l'exemple représenté, le dissipateur thermique 5 peut comporter une plaque 7 dont une face opposée à l'élément capacitif 3 forme la face libre 6 du dissipateur thermique 5.

La plaque 7 peut comporter deux faces opposées reliées par un bord 16 s'étendant transversalement à ces deux faces. En particulier, une face de la plaque comprend la face libre 6 du dissipateur thermique 5. Notamment, la face de la plaque opposée à la face 6 libre vient en appui contre l'élément capacitif, en particulier directement ou indirectement par l'intermédiaire d'une couche 9 thermoconductrice et diélectrique différente de la substance de remplissage 4.

La substance de remplissage 4 vient notamment en contact avec le bord 16 de la plaque 7. Autrement dit, la substance de remplissage 4 vient contre l'épaisseur de la plaque 7. La substance de remplissage 4 vient en contact avec le bord 16 de la plaque 7 en particulier sur une hauteur supérieure ou égale à 2mm depuis la face de la plaque 7 en contact avec l'élément capacitif 3. Ainsi, l'étanchéité autour de la plaque 7 est réalisé et on évite une infiltration d'humidité autour de la plaque 7 jusqu'à l'élément capacitif 3.

En particulier, le dissipateur thermique 5 et l'élément capacitif 3 sont maintenus ensemble par la substance de remplissage 4 solidifiée. Ceci est notamment le cas lorsque la substance de remplissage 4 est une substance polymérisable, telle qu'une résine polymérisable par exemple. Ainsi, la substance de remplissage 4 contribue au moins en partie au maintien ensemble du dissipateur thermique 5 et de l'élément capacitif 3. Ainsi, le bloc capacitif 1 forme un seul objet manipulable.

Dans l'exemple représenté, la substance de remplissage 4 s'étend à une hauteur inférieure à la hauteur de la face libre 6 du dissipateur thermique 5, lesdites hauteurs étant définies par rapport à un fond 8 du boîtier 2. Ainsi, lorsque le bloc capacitif 1 est amené contre un circuit de refroidissement 13, par un côté comprenant la face libre 6 du dissipateur 5, la face libre 6 vient contre le circuit de refroidissement 13, aucune surélévation de la substance de remplissage 4 n'empêche un contact de la face libre 6 avec le circuit de refroidissement 13. Une dissipation thermique efficace du dissipateur thermique 5 vers le circuit de refroidissement 13 peut donc être obtenue.

Le dissipateur thermique 5 peut comporter une couche d'interface 9 thermoconductrice et diélectrique. La couche d'interface 9 forme un contact du dissipateur thermique 5 avec l'élément capacitif 3. Notamment, la couche d'interface 9 est insérée entre l'élément capacitif 3 et ladite plaque 7. Le caractère diélectrique de la couche d'interface 9 empêche un court circuit entre l'élément capacitif 3 et la plaque 7 du dissipateur thermique 5, tandis que sa conductivité thermique permet une dissipation efficace de la chaleur. Notamment, sa conductivité thermique est supérieure à celle de la substance de remplissage 4. En particulier, la couche d'interface 9 est une feuille de matériau isolant et diélectrique, préformée et rapportée. En variante, la couche d'interface 9 peut être une substance thermique, ayant une conductivité thermique supérieure à celle de la substance de remplissage 4. La couche d'interface 9 peut être une graisse thermique, appliquée sur l'élément capacitif 3 ou sur la plaque 7 de du dissipateur thermique 5.

Selon une variante, la couche d'interface 9 a une portion débordante 15 autour de la plaque 7. Autrement dit, la couche d'interface 9 dépasse tout autour de la plaque 7 du dissipateur thermique 5. Ceci est particulièrement avantageux lorsque la plaque 7 est susceptible de réaliser un court-circuit avec l'élément capacitif 3. La portion débordante 15 de la couche d'interface 9 empêche la création d'un arc électrique entre l'élément capacitif 3 et la plaque 7 du dissipateur thermique 5.

Notamment, l'élément capacitif 3 comporte au moins une languette 10 de connexion électrique. La languette 10 forme une face de contact de l'élément capacitif 3 avec le dissipateur thermique 5. La languette 10 se connecte électriquement à une électrode de l'élément capacitif 3 par une face opposée à sa face de contact. Ainsi, la languette 10 de connexion électrique est directement en contact avec le dissipateur thermique 5, ce qui permet de dissiper efficacement une chaleur produite dans la languette 10 de connexion électrique. En outre, le positionnement de la languette 10 de connexion du même côté que le dissipateur thermique 5 permet de limiter une dimension du bloc capacitif 1 sur un côté contigu. La languette 10 est notamment une partie d'une barre de connexion électrique 11. La barre de connexion électrique 11 permet une connexion électrique du bloc capacitif à d'autres éléments électriques, notamment à un module électronique de puissance. La barre de connexion électrique 11 comprend notamment une partie 11a destinée à venir contre des bornes des autres équipements électriques. En particulier, cette partie 11a est positionnée de façon déportée par rapport à la face de contact 6 du dissipateur thermique 5, notamment par rapport à la plaque 7, afin de ne pas entraver le contact entre le dissipateur thermique 5, notamment la plaque 7, et le circuit de refroidissement 13.

En particulier, la forme du boîtier 2 est adaptée à la forme extérieure de l'élément capacitif 3. L'exemple illustré montre un boîtier 2 en forme de pavé droit aux angles arrondis. Le boîtier 2 comprend notamment une paroi formant un fond 8 du boîtier 2. Depuis le fond 8 du boîtier 2 des parois 12 s'étendent de manière à former des parois 12 latérales du boîtier 2. Le fond 8 et les parois 12 latérales définissent un logement recevant l'élément capacitif 3. Une face de l'élément capacitif 3, opposée au fond 8 du boîtier 2 forme la face venant directement contre le dissipateur thermique 5. Le boîtier 2 sert donc de récipient pour l'élément capacitif 3 et la substance de remplissage 4. Le bloc capacitif 1 est ainsi isolé électriquement et forme donc un élément facile à intégrer dans un équipement électrique. Cependant, le boîtier 2 pourrait avoir une autre forme en fonction de la forme de l'élément capacitif 3. La forme du boîtier 2 permet de recevoir entièrement l'élément capacitif 3 et une couche de la substance de remplissage 4 sur toute la hauteur h de l'élément capacitif 3. En particulier, la substance de remplissage 4 entoure l'élément capacitif 3 entièrement, notamment entre l'élément capacitif 3 et les fond 8 et parois latérales 12 du boîtier 2. L'épaisseur de la couche de substance de remplissage 4 est notamment égale entre l'élément capacitif 3 et les parois 12 du boîtier 2.

Afin de faciliter l'introduction de la substance de remplissage à l'état fluide dans le boîtier 2, le boîtier 2 est pourvu d'une protubérance 18 dans une des parois latérales 12. La protubérance 18 a notamment la forme d'une encoche inclinée.

Dans l'exemple représenté, le dissipateur thermique 5 peut être à distance d'une paroi interne du boîtier 2. Lorsque le bloc capacitif 1 est monté dans un équipement électrique, cela permet de limiter le risque de l'occurrence d'un court-circuit avec un composant voisin du bloc capacitif 1 à travers une paroi du boîtier 2.

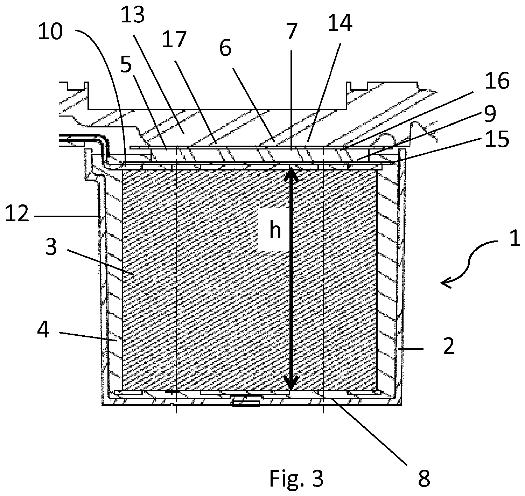

La figure 3 montre en coupe l'agencement du bloc capacitif 1 au circuit de refroidissement 13. Une deuxième couche d'interface 17 peut être agencée entre le refroidisseur 13 et la plaque 7. Cette deuxième couche d'interface 17 améliore le contact des surfaces du circuit de refroidissement 13 et de la plaque 7. Cette seconde couche d'interface 7 présente des caractéristiques similaires à celles de la première couche d'interface 9.

Dans une variante, non-représenté la face libre 6 du dissipateur thermique 5 peut être pourvue d'excroissances, formant notamment des ailettes ou des pions de refroidissement. Ces excroissances pénètrent directement dans le circuit de refroidissement 13 pour être baignées par le fluide de refroidissement. Les excroissances sont notamment réparties sur toute la face libre 6 de la plaque 7, à l'exception d'une bande plate en périphérie. Le circuit de refroidissement comporte donc une ouverture apte à entourer les excroissances. Le bord de cette ouverture se pose sur la bande plate de la plaque 7. Le bord de l'ouverture du circuit de refroidissement peut présenter une rainure, dans laquelle un joint est reçu. Le joint assure l'étanchéité de l'assemblage entre le circuit de refroidissement et la plaque 7, afin d'éviter tout fuite du fluide de refroidissement.

**Références :**

| | |
|---|---|
| Bloc capacitif | 1 |
| Boîtier | 2 |
| Élément capacitif | 3 |
| Substance de remplissage | 4 |
| Dissipateur thermique | 5 |
| Face libre | 6 |
| Plaque | 7 |
| Fond | 8 |
| Première couche d'interface | 9 |
| Languette | 10 |
| Barre de connexion électrique | 11 |
| Parois latérales | 12 |
| Circuit de refroidissement | 13 |
| Face du circuit | 14 |
| Portion débordante | 15 |
| Bord | 16 |
| Deuxième couche d'interface | 17 |
| Encoche de remplissage | 18 |

## Revendications

1. Bloc capacitif (1), notamment pour un équipement électrique, comportant
- un boîtier (2),
- un élément capacitif (3) logé dans le boîtier (2),
- une substance (4) remplissant l'espace entre le boîtier (2) et l'élément capacitif (3) de manière à réaliser une étanchéité de l'élément capacitif (3),
- un dissipateur thermique (5) contre lequel l'élément capacitif (3) est en contact direct, où le dissipateur thermique (5) du bloc capacitif (1) est différent de ladite substance (4) de remplissage,
une face dudit dissipateur thermique (5), dite face libre (6), formant une face externe du bloc capacitif (1) et étant dépourvue de ladite substance (4) de remplissage.

2. Bloc capacitif (1) selon la revendication 1, dans lequel le dissipateur thermique (5) présente une conductivité thermique supérieure à celle de la substance (4) de remplissage.

3. Bloc capacitif (1) selon la revendication 1 ou 2, dans lequel le dissipateur thermique (5) comporte une plaque (7) dont une face opposée à l'élément capacitif (3) forme ladite face libre (6) du dissipateur thermique (5).

4. Bloc capacitif (1) selon l'une des revendications précédentes, dans lequel la substance (4) de remplissage s'étend à une hauteur inférieure à la hauteur de la face libre (6) du dissipateur thermique (5), lesdites hauteurs étant définies par rapport à un fond (8) du boîtier (2).

5. Bloc capacitif (1) selon l'une des revendications précédentes, dans lequel le dissipateur thermique (5) comporte une couche d'interface (9) thermoconductrice et diélectrique formant un contact du dissipateur thermique (5) avec l'élément capacitif (3).

6. Bloc capacitif (1) selon les revendications 5 et 3, dans lequel ladite couche d'interface (9) a une portion débordante (15) autour de ladite plaque (7).

7. Bloc capacitif (1) selon l'une des revendications précédentes, dans lequel l'élément capacitif (3) comporte au moins une languette (10) de connexion électrique, ladite languette (10) formant une face de contact de l'élément capacitif (3) avec le dissipateur thermique (5) et ladite languette (10) se connectant électriquement à une électrode de l'élément capacitif (3) par une face opposée à sa face de contact.

8. Bloc capacitif (1) selon l'une des revendications précédentes, dans lequel le boîtier (2) comprend une paroi formant un fond (8) du boîtier (2), depuis lequel des parois (12) s'étendent formant des parois (12) latérales du boîtier (2), ledit fond (8) et lesdites parois (12) latérales définissant un logement recevant ledit élément capacitif (3), et une face de l'élément capacitif (3) opposée au fond (8) du boîtier (2) formant une face venant directement contre le dissipateur thermique (5).

9. Ensemble comprenant un bloc capacitif (1) selon l'une des revendications précédentes assemblé avec un circuit de refroidissement (13) qui est configuré pour recevoir un fluide destiné à drainer la chaleur du bloc capacitif (1)
ladite face libre (6) du dissipateur thermique (5) venant contre une face (14) dudit circuit de refroidissement (13).

10. Procédé d'assemblage d'un bloc capacitif (1) comprenant :
- le positionnement d'un élément capacitif (3) dans un boîtier (2) à travers une ouverture du boîtier,
- le positionnement d'un dissipateur thermique (5) contre une face de l'élément capacitif (3) faisant face à ladite ouverture du boîtier,
- le dépôt d'une substance (4) réalisant une étanchéité de l'élément capacitif (3) en remplissant l'espace entre l'élément capacitif (3) et le boîtier, à l'exception d'une zone comprenant une face du dissipateur thermique (5), dite face libre (6), qui est opposée à l'élément capacitif (3) et qui forme une face externe (6) du bloc capacitif (1).

## Patentansprüche

1. Kapazitiver Block (1) insbesondere für eine elektrische Vorrichtung, aufweisend
- ein Gehäuse (2),
- ein im Gehäuse (2) angeordnetes kapazitives Element (3),
- eine zur Abdichtung des kapazitiven Elements (3) in den Raum zwischen dem Gehäuse (2) und dem kapazitiven Element (3) gefüllte Substanz (4),
- einen Wärmeleiter (5), an dem das kapazitive Element (3) direkt anliegt,
sich der Wärmeleiter (5) des kapazitiven Blocks (1) von der Füllsubstanz (4) unterscheidet,
eine Fläche des Wärmeleiters (5), Freifläche (6) bezeichnet, eine Außenfläche des kapazitiven Blocks (1) ohne Füllsubstanz, (4) aufweist.

2. Kapazitiver Block (1) nach Anspruch 1, wobei der Wärmeleiter (5) eine höhere Wärmeleitfähigkeit, als die Füllsubstanz (4) aufweist.

3. Kapazitiver Block (1) nach Anspruch 1 oder 2, wobei der Wärmeleiter (5) eine Platte (7) aufweist, deren dem kapazitiven Element (3) abgewandte Fläche die Freifläche (6) des Wärmeleiters (5) bildet.

4. Kapazitiver Block (1) nach einem der vorhergehenden Ansprüche, wobei sich die Füllsubstanz (4) bis zu einer geringeren Höhe erstreckt, als die Höhe auf der die Freifläche (6) des Wärmeleiters (5) liegt, wobei sich die Höhen auf den Boden (8) des Gehäuses (2) beziehen.

5. Kapazitiver Block (1) nach einem der vorhergehenden Ansprüche, wobei der Wärmeleiter (5) eine wärmeleitende und dielektrische Grenzflächenschicht (9) aufweist, die einen Kontakt des Wärmeleiters (5) mit dem kapazitiven Element (3) bildet.

6. Kapazitiver Block (1) nach den Ansprüchen 5 und 3, wobei die Grenzflächenschicht (9) einen um die Platte (7) hervortretenden Abschnitt (15) aufweist.

7. Kapazitiver Block (1) nach einem der vorhergehenden Ansprüche, wobei das kapazitive Element (3) wenigstens eine elektrische Verbindungslasche (10) aufweist, die eine Kontaktfläche des kapazitiven Elements (3) zum Kontakt mit dem Wärmeleiter (5) ausbildet und sich an der der Kontaktfläche abgewandten Seite elektrisch mit einer Elektrode des kapazitiven Elements (3) verbindet.

8. Kapazitiver Block (1) nach einem der vorhergehenden Ansprüche, wobei das Gehäuse (2) eine Begrenzung umfasst, die einen Boden (8) des Gehäuses (2) ausbildet, von welchem aus sich Wände (12) unter Bildung von Seitenwänden (12) des Gehäuses (2) erstrecken, wobei der Boden (8) und die Seitenwände (12) einen Raumbeschreiben, der das kapazitive Element (3) aufnimmt, und eine dem Boden (8) des Gehäuses (2)abgewandten Fläche des kapazitiven Element (3) eine Fläche ausbildet, die direkt an dem Wärmeleiter (5) anliegt.

9. Anordnung umfassend einen kapazitiven Block (1) nach einem der vorhergehenden Ansprüche, der mit einem Kühlkreislauf (13) zusammengesetzt ist, der dazu ausgebildet ist, ein Fluid zur Ableitung der Wärme des kapazitiven Blocks (1) aufzunehmen
wobei die Freifläche (6) des Wärmeleiters (5) an einer Fläche (14) des Kühlkreislaufs (13) anliegt.

10. Verfahren zur Zusammensetzung eines kapazitiven Blocks (1) umfassend:
- das Positionieren eines kapazitiven Elements (3) in einem Gehäuse (2) durch eine Öffnung des Gehäuses,
- das Positionieren eines Wärmeleiters (5) an einer Fläche des kapazitiven Elements (3), die der Öffnung des Gehäuses zugewandt ist,
- das Einbringen einer Substanz (4), zur Abdichtung des kapazitiven Elements (3), durch füllen des Zwischenraums zwischen dem kapazitiven Element (3) und dem Gehäuse bis auf einen Bereich, der eine Fläche des Wärmeleiters (5) umfasst, die als freie Fläche (6) benannt, dem kapazitiven Element (3) abgewandt eine Außenfläche (6) des kapazitiven Blocks (1) ausbildet.

## Claims

1. Capacitive block (1), notably for an electrical equipment, comprising
- a housing (2),
- a capacitive element (3) housed in the housing (2),
- a substance (4) filling the space between the housing (2) and the capacitive element (3) so as to provide the sealing of the capacitive element (3),
- a heat sink (5) on which the capacitive element (3) is directly abutting,
in which the heat sink (5) of the capacitive block (1) is different from said filling substance (4), a face of said heat sink (5), called free face (6), forming an outer face of the capacitive block (1) and being without said filling substance (4).

2. Capacitive block (1) according to Claim 1, wherein the heat sink's (5) thermal conductivity is greater than that of the filling substance (4).

3. Capacitive block (1) according to Claim 1 or 2, wherein the heat sink (5) comprises a plate (7) of which a face opposite to the capacitive element (3) forms said free face (6) of the heat sink (5).

4. Capacitive block (1) according to one of the preceding claims, wherein the filling substance (4) extends to a height less than the height of the free face (6) of the heat sink (5), said heights being defined with respect to a bottom (8) of the housing (2) .

5. Capacitive block (1) according to one of the preceding claims, wherein the heat sink (5) comprises a thermal conducting and dielectric interface layer (9) forming a contact of the heat sink (5) with the capacitive element (3).

6. Capacitive block (1) according to Claims 5 and 3, wherein said interface layer (9) has an overflowing portion (15) around said plate (7).

7. Capacitive block (1) according to one of the preceding claims, wherein the capacitive element (3) comprises at least one electrical connection tongue (10), said tongue (10) forming a contact face of the capacitive element (3) to the heat sink (5) and said tongue (10) connecting electrically to an electrode of the capacitive element (3) by a face opposite to its contact face.

8. Capacitive block (1) according to one of the preceding claims, wherein the housing (2) comprises a wall forming a bottom (8) of the housing (2), from which walls (12) extend forming side walls (12) of the housing (2), said bottom (8) and said side walls (12) determine a housing receiving said capacitive element (3), and a face of the capacitive element (3) opposite to the bottom (8) of the housing (2) forming a face abutting directly against the heat sink (5).

9. Assembly comprising a capacitive block (1) according to one of the preceding claims assembled with a cooling circuit (13) which is configured to receive a fluid intended to drain the heat from the capacitive block (1)
said free face (6) of the heat sink (5) abutting against a face (14) of said cooling circuit (13).

10. Method for assembling a capacitive block (1) comprising:
- the positioning of a capacitive element (3) in a housing (2) through an opening of the housing,
- the positioning of a heat sink (5) against a face of the capacitive element (3) facing said opening of the housing,
- the deposition of a substance (4) generating a sealing of the capacitive element (3) by filling the space between the capacitive element (3) and the housing, apart from a zone comprising a face of the heat sink (5), called free face (6), which is opposite of the capacitive element (3) and which forms an outer face (6) of the capacitive block (1).
